# EUROPEAN PATENT APPLICATION

(11) **EP 3 156 231 A1**
(43) Date of publication of application: **19.04.2017**
(21) Application number: 16193764.4
(22) Date of filing: 13.10.2016
(51) Int. Cl.: B33Y 70/00, B22F 1/00, B22F 3/105, B28B 1/00, B29C 67/00

(54) **FLOWABLE COMPOSITION SET AND FLOWABLE COMPOSITION**

(30) Priority: 15.10.2015 JP 2015203485
(71) Applicant: Seiko Epson Corporation, Tokyo 160-8801 (JP)
(72) Inventor: OKAMOTO, Eiji, Suwa-shi, Nagano 392-8502 (JP); ISHIDA, Masaya, Suwa-shi, Nagano 392-8502 (JP); HIRAI, Toshimitsu, Suwa-shi, Nagano 392-8502 (JP)
(74) Representative: Miller Sturt Kenyon

(57) **Abstract**

A flowable composition set includes a flowable composition containing constituent material particles of a three-dimensionally shaped article and a flowable composition containing support section forming particles for forming a support section which supports the three-dimensionally shaped article when forming the three-dimensionally shaped article, wherein the sintering temperature of the support section forming particles is higher than the sintering temperature of the constituent material particles. According to such a flowable composition set, a post-treatment step after forming the three-dimensionally shaped article can be reduced.

## Description

### BACKGROUND

### 1. Technical Field

The present invention relates to a flowable composition set and a flowable composition to be used when forming a three-dimensionally shaped article.

### 2. Related Art

Heretofore, various methods for producing a three-dimensionally shaped article have been performed. Among these, a method for forming a three-dimensionally shaped article using a flowable composition has been disclosed.

For example, JP-A-2008-184622 discloses a three-dimensionally shaped article production method in which a layer is formed using a metal paste as a flowable composition, and a three-dimensionally shaped article is produced while sintering or fusing a region corresponding to the three-dimensionally shaped article by irradiating the region with a laser.

However, in the case where a three-dimensionally shaped article is produced while sintering or fusing a region corresponding to the three-dimensionally shaped article, due to the heat when performing sintering or fusing, a portion other than the region corresponding to the three-dimensionally shaped article is also sintered or fused, and therefore, the load of a separation work when the three-dimensionally shaped article is taken out, a shaping work after the three-dimensionally shaped article is taken out, and the like is sometimes large. That is, in the production method for producing a three-dimensionally shaped article in the related art, a post-treatment step for a three-dimensionally shaped article to be produced could not be sufficiently reduced.

### SUMMARY

An advantage of some aspects of the invention is to reduce the post-treatment step after forming a three-dimensionally shaped article.

A flowable composition set according to a first aspect of the invention is a flowable composition set including a flowable composition containing constituent material particles of a three-dimensionally shaped article and a flowable composition containing support section forming particles for forming a support section which supports the three-dimensionally shaped article when forming the three-dimensionally shaped article, wherein the sintering temperature of the support section forming particles is higher than the sintering temperature of the constituent material particles.

According to this aspect, the sintering temperature of the support section forming particles is higher than the sintering temperature of the constituent material particles. Therefore, the sintering of the support section can be suppressed while sintering the constituent material of the three-dimensionally shaped article. Due to this, the increase in the load of a separation work when the three-dimensionally shaped article is taken out, a shaping work after the three-dimensionally shaped article is taken out, and the like resulted from the sintering of also a portion other than the region corresponding to the three-dimensionally shaped article can be suppressed. As a result, the post-treatment step after forming the three-dimensionally shaped article can be reduced.

A flowable composition set according to a second aspect of the invention is a flowable composition set including a flowable composition containing constituent material particles of a three-dimensionally shaped article and a flowable composition containing support section forming particles for forming a support section which supports the three-dimensionally shaped article when forming the three-dimensionally shaped article, wherein the melting point of the support section forming particles is higher than the melting point of the constituent material particles.

According to this aspect, the melting point of the support section forming particles is higher than the melting point of the constituent material particles. Therefore, the fusion of the support section can be suppressed while fusing the constituent material of the three-dimensionally shaped article. Due to this, the increase in the load of a separation work when the three-dimensionally shaped article is taken out, a shaping work after the three-dimensionally shaped article is taken out, and the like resulted from the fusion of also a portion other than the region corresponding to the three-dimensionally shaped article can be suppressed. As a result, the post-treatment step after forming the three-dimensionally shaped article can be reduced.

A flowable composition set according to a third aspect of the invention is directed to the flowable composition set according to the first or second aspect, in which at least one of the flowable composition containing the constituent material particles and the flowable composition containing the support section forming particles contains at least one of a solvent and a binder.

According to this aspect, at least one of the flowable composition containing the constituent material particles and the flowable composition containing the support section forming particles contains at least one of a solvent and a binder. When the flowable composition contains a solvent, the scattering or the like of solid particles can be suppressed, and when the flowable composition contains a binder, the collapse of the shape before sintering or fusing the constituent material of the three-dimensionally shaped article can be suppressed. As a result, the workability when producing the three-dimensionally shaped article can be improved.

A flowable composition set according to a fourth aspect of the invention is directed to the flowable composition set according to any one of the first to third aspects, in which the support section forming particles contain ceramic particles.

According to this aspect, the support section forming particles contain ceramic particles. A ceramic has a high sintering temperature and a high melting point, and therefore, the sintering or fusion of a portion other than the region corresponding to the three-dimensionally shaped article can be easily suppressed.

A flowable composition set according to a fifth aspect of the invention is directed to the flowable composition set according to any one of the first to third aspects, in which the constituent material particles contain metal particles.

According to this aspect, the constituent material particles contain metal particles. Therefore, a robust three-dimensionally shaped article can be produced.

The term "metal particles" includes an alloy and a metal compound in addition to a pure metal, and also includes a metalloid and a metalloid compound.

A flowable composition set according to a sixth aspect of the invention is directed to the flowable composition set according to any one of the first to third aspect, in which the support section forming particles contain ceramic particles and the constituent material particles contain metal particles.

According to this aspect, the support section forming particles contain ceramic particles and the constituent material particles contain metal particles. Therefore, the sintering or fusion of a portion other than the region corresponding to the three-dimensionally shaped article can be easily suppressed, and also a robust three-dimensionally shaped article can be produced.

A flowable composition set according to a seventh aspect of the invention is directed to the flowable composition set according to any one of the first to third aspects, in which the support section forming particles contain at least one of metal particles and ceramic particles, and the constituent material particles contain resin particles.

According to this aspect, the support section forming particles contain at least one of metal particles and ceramic particles, and the constituent material particles contain resin particles. Therefore, a three-dimensionally shaped article made of a resin can be produced while suppressing the sintering or fusion of a portion other than the region corresponding to the three-dimensionally shaped article.

A flowable composition set according to an eighth aspect of the invention is directed to the flowable composition set according to any one of the fourth, sixth and seventh aspects, in which the ceramic particles are particles containing at least one component selected from silica, alumina, titanium oxide, zinc oxide, zircon oxide, tin oxide, barium titanate, potassium titanate, magnesium oxide, and sodium oxide.

According to this aspect, the sintering or fusion of a portion other than the region corresponding to the three-dimensionally shaped article can be effectively suppressed.

A flowable composition set according to a ninth aspect of the invention is directed to the flowable composition set according to any one of the fifth to seventh aspects, in which the metal particles are particles containing at least one component selected from aluminum, titanium, iron, copper, magnesium, stainless steel, maraging steel, silica, alumina, titanium oxide, zinc oxide, zircon oxide, tin oxide, barium titanate, potassium titanate, magnesium oxide, sodium oxide, magnesium hydroxide, aluminum hydroxide, potassium hydroxide, silicon nitride, titanium nitride, zinc sulfide, calcium carbonate, magnesium carbonate, calcium silicate, magnesium silicate, calcium phosphate, aluminum borate, and magnesium borate.

According to this aspect, a particularly robust three-dimensionally shaped article can be produced.

A flowable composition according to a tenth aspect of the invention is a flowable composition which is used along with a flowable composition containing support section forming particles for forming a support section which supports a three-dimensionally shaped article when forming the three-dimensionally shaped article, and contains constituent material particles of the three-dimensionally shaped article, wherein the sintering temperature of the support section forming particles is higher than the sintering temperature of the constituent material particles.

According to this aspect, the sintering temperature of the support section forming particles is higher than the sintering temperature of the constituent material particles. Therefore, the sintering of the support section can be suppressed while sintering the constituent material of the three-dimensionally shaped article. Due to this, the increase in the load of a separation work when the three-dimensionally shaped article is taken out, a shaping work after the three-dimensionally shaped article is taken out, and the like resulted from the sintering of also a portion other than the region corresponding to the three-dimensionally shaped article can be suppressed. As a result, the post-treatment step after forming the three-dimensionally shaped article can be reduced.

A flowable composition according to an eleventh aspect of the invention is a flowable composition which is used along with a flowable composition containing constituent material particles of a three-dimensionally shaped article, and contains support section forming particles for forming a support section which supports the three-dimensionally shaped article when forming the three-dimensionally shaped article, wherein the sintering temperature of the support section forming particles is higher than the sintering temperature of the constituent material particles.

According to this aspect, the sintering temperature of the support section forming particles is higher than the sintering temperature of the constituent material particles. Therefore, the sintering of the support section can be suppressed while sintering the constituent material of the three-dimensionally shaped article. Due to this, the increase in the load of a separation work when the three-dimensionally shaped article is taken out, a shaping work after the three-dimensionally shaped article is taken out, and the like resulted from the sintering of also a portion other than the region corresponding to the three-dimensionally shaped article can be suppressed. As a result, the post-treatment step after forming the three-dimensionally shaped article can be reduced.

A flowable composition according to a twelfth aspect of the invention is directed to the flowable composition according to the tenth or eleventh aspect, in which the sintering temperature of the support section forming particles is 1350°C or higher and 1600°C or lower, and the sintering temperature of the constituent material particles is 1100°C or higher and 1400°C or lower.

According to this aspect, the increase in the load of a separation work when the three-dimensionally shaped article is taken out, a shaping work after the three-dimensionally shaped article is taken out, and the like resulted from the sintering of also a portion other than the region corresponding to the three-dimensionally shaped article can be effectively suppressed.

A flowable composition according to a thirteenth aspect of the invention is a flowable composition which is used along with a flowable composition containing support section forming particles for forming a support section which supports a three-dimensionally shaped article when forming the three-dimensionally shaped article, and contains constituent material particles of the three-dimensionally shaped article, wherein the melting point of the support section forming particles is higher than the melting point of the constituent material particles.

According to this aspect, the melting point of the support section forming particles is higher than the melting point of the constituent material particles. Therefore, the fusion of the support section can be suppressed while fusing the constituent material of the three-dimensionally shaped article. Due to this, the increase in the load of a separation work when the three-dimensionally shaped article is taken out, a shaping work after the three-dimensionally shaped article is taken out, and the like resulted from the fusion of also a portion other than the region corresponding to the three-dimensionally shaped article can be suppressed. As a result, the post-treatment step after forming the three-dimensionally shaped article can be reduced.

A flowable composition according to a fourteenth aspect of the invention is a flowable composition which is used along with a flowable composition containing constituent material particles of a three-dimensionally shaped article, and contains support section forming particles for forming a support section which supports the three-dimensionally shaped article when forming the three-dimensionally shaped article, wherein the melting point of the support section forming particles is higher than the melting point of the constituent material particles.

According to this aspect, the melting point of the support section forming particles is higher than the melting point of the constituent material particles. Therefore, the fusion of the support section can be suppressed while fusing the constituent material of the three-dimensionally shaped article. Due to this, the increase in the load of a separation work when the three-dimensionally shaped article is taken out, a shaping work after the three-dimensionally shaped article is taken out, and the like resulted from the fusion of also a portion other than the region corresponding to the three-dimensionally shaped article can be suppressed. As a result, the post-treatment step after forming the three-dimensionally shaped article can be reduced.

A flowable composition according to a fifteenth aspect of the invention is directed to the flowable composition according to the thirteenth or fourteenth aspect, in which the melting point of the support section forming particles is 1700°C or higher and 2730°C or lower, the sintering temperature of the support section forming particles is 1300°C or higher and 1600°C or lower, and the melting point of the constituent material particles is 1500°C or higher and 1600°C or lower.

According to this aspect, the increase in the load of a separation work when the three-dimensionally shaped article is taken out, a shaping work after the three-dimensionally shaped article is taken out, and the like resulted from the fusion or excessive sintering of a portion other than the region corresponding to the three-dimensionally shaped article can be effectively suppressed.

A flowable composition according to a sixteenth aspect of the invention is a flowable composition which is used in a three-dimensionally shaped article production device in which a three-dimensionally shaped article is solidified by heating when forming the three-dimensionally shaped article, wherein at least one of the sintering temperature and the melting point when the three-dimensionally shaped article is solidified with the formation of the three-dimensionally shaped article is indicated.

According to this aspect, at least one of the sintering temperature and the melting point for determining the heating temperature when the three-dimensionally shaped article is solidified is indicated. Therefore, for example, in the case where the flowable composition is used in a three-dimensionally shaped article production device which uses both of a flowable composition containing constituent material particles and a flowable composition containing support section forming particles, even when the flowable composition is used as a flowable composition containing constituent material particles or as a flowable composition containing support section forming particles, the sintering or fusion of a portion other than the region corresponding to the three-dimensionally shaped article can be effectively suppressed.

The phrase "at least one of the sintering temperature and the melting point when the three-dimensionally shaped article is solidified is indicated" includes a case where the sintering temperature or the melting point is directly indicated on a storage section or the like of the flowable composition, and other than this, also includes a case where the sintering temperature or the melting point is indirectly indicated by indicating the range of the recommended heating temperature. Further, a case where the sintering temperature or the melting point is indirectly indicated by indicating a model name or the like of a three-dimensionally shaped article production device in which the range of the heating temperature is specified as the three-dimensionally shaped article production device which can be used is also included. In addition, a case where the sintering temperature or the melting point is directly indicated on a container or a packaging material of the flowable composition, and also a case where the sintering temperature or the melting point is indicated on another material associated therewith (for example, an instruction, a material safety data sheet (abbreviated as "MSDS"), or the like) are also included.

### BRIEF DESCRIPTION OF THE DRAWINGS

Embodiments of the invention will now be described by way of example only with reference to the accompanying drawings, wherein like numbers reference like elements.
FIG. 1A is a schematic view showing a configuration of a three-dimensionally shaped article production device according to one embodiment of the invention, and FIG. 1B is an enlarged view of a portion C shown in FIG. 1A.
FIG. 2A is a schematic view showing a configuration of a three-dimensionally shaped article production device according to one embodiment of the invention, and FIG. 2B is an enlarged view of a portion C' shown in FIG. 2A.
FIG. 3 is an external view of a head base according to one embodiment of the invention seen from the direction of the arrow D shown in FIG. 1B.
FIG. 4 is a cross-sectional view taken along the line E-E' shown in FIG. 3.
FIGS. 5A to 5C are plan views conceptually illustrating a relationship between the arrangement of head units according to one embodiment of the invention and the formation form of a landing portion.
FIGS. 6D and 6E are plan views conceptually illustrating a relationship between the arrangement of head units according to one embodiment of the invention and the formation form of a landing portion.
FIG. 7 is a plan view conceptually illustrating a relationship between the arrangement of head units according to one embodiment of the invention and the formation form of a landing portion.
FIGS. 8A and 8B are schematic views showing examples of other arrangement of head units placed in a head base.
FIGS. 9A to 9H are schematic views showing a process for producing a three-dimensionally shaped article according to one embodiment of the invention.
FIG. 10 is a flowchart showing a three-dimensionally shaped article production method according to one embodiment of the invention.
FIGS. 11A to 11E are schematic views showing a process for producing a three-dimensionally shaped article according to one embodiment of the invention.
FIG. 12 is a flowchart showing a three-dimensionally shaped article production method according to one embodiment of the invention.

### DESCRIPTION OF EXEMPLARY EMBODIMENTS

Hereinafter, an embodiment according to the invention will be described with reference to the accompanying drawings.

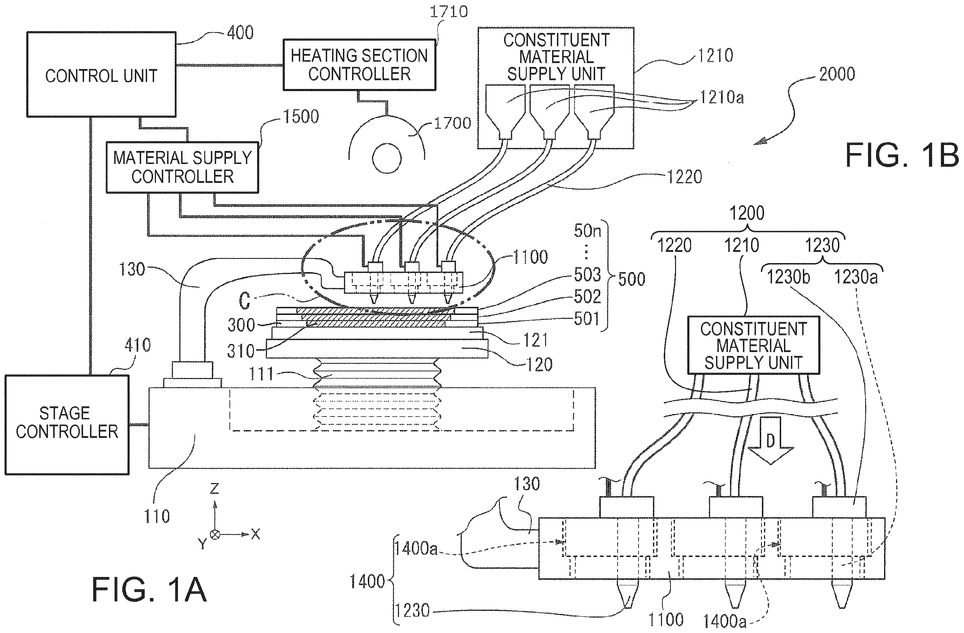

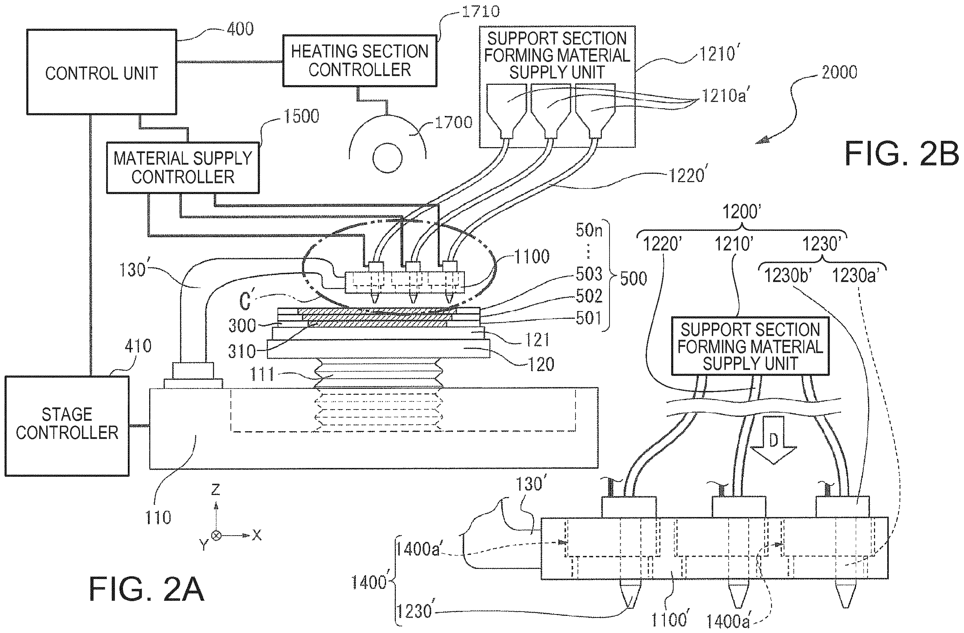

FIGS. 1A and 1B and FIGS. 2A and 2B are schematic views showing a configuration of a three-dimensionally shaped article production device according to one embodiment of the invention.

Here, the three-dimensionally shaped article production device according to this embodiment includes two types of material supply sections (head bases), however, FIGS. 1A and 1B and FIGS. 2A and 2B are views each showing only one kind of material supply section, and the illustration of the other kind of material supply section is omitted. Further, the material supply section shown in FIGS. 1A and 1B is a material supply section which supplies a flowable composition (constituent material) containing constituent material particles of a three-dimensionally shaped article. By contrast, the material supply section shown in FIGS. 2A and 2B is a material supply section which supplies a flowable composition (support section forming material) containing support section forming particles for forming a support section which supports a three-dimensionally shaped article when forming the three-dimensionally shaped article. Incidentally, the flowable composition containing constituent material particles and the flowable composition containing support section forming particles of this embodiment both contain a solvent and a binder, however, those which do not contain these components may be used.

The term "three-dimensionally shaping" as used herein refers to a process for forming a so-called three-dimensional object, and also includes, for example, a process for forming a shape with a thickness even if the shape is a plate shape or a so-called two-dimensional shape. Further, the term "support" includes a case where an object is supported from a lower side, and other than this, also includes a case where an object is supported from a lateral side, and a case where an object is supported from an upper side depending on the situation.

A three-dimensionally shaped article production device 2000 (hereinafter referred to as "formation device 2000") shown in FIGS. 1A and 1B and FIGS. 2A and 2B includes a base 110 and a stage 120 which is provided movably in the X, Y, and Z directions shown in the drawings or provided drivably in the rotational direction about the Z axis by a drive device 111 as a drive section provided in the base 110.

Then, as shown in FIGS. 1A and 1B, the formation device 2000 includes a head base support section 130, one end of which is fixed to the base 110, and to the other end of which a head base 1100 which holds a plurality of head units 1400 each including a constituent material ejection section 1230 for ejecting the constituent material is held and fixed.

Further, as shown in FIGS. 2A and 2B, the formation device 2000 includes a head base support section 130', one end of which is fixed to the base 110, and to the other end of which a head base 1100' which holds a plurality of head units 1400' each including a support section forming material ejection section 1230' for ejecting the support section forming material is held and fixed.

Here, the head base 1100 and the head base 1100' are provided in parallel on the XY plane.

The constituent material ejection section 1230 and the support section forming material ejection section 1230' have the same configuration except that the material (the constituent material and the support section forming material) to be ejected is different. However, the invention is not limited to such a configuration.

On the stage 120, layers 501, 502, and 503 are formed in the process for forming a three-dimensionally shaped article 500. Further, in a region facing the stage 120, a heating section 1700, in which the irradiation of thermal energy is on-off controlled by a heating section controller 1710 connected to a control unit 400, which will be described later, and which can heat the entire region of the stage 120 is provided.

In the formation of the three-dimensionally shaped article 500, thermal energy is irradiated by the heating section 1700, and therefore, in order to protect the stage 120 from heat, a sample plate 121 having heat resistance is used, and the three-dimensionally shaped article 500 may be formed on the sample plate 121. By using, for example, a ceramic plate as the sample plate 121, high heat resistance can be obtained. Further, the ceramic plate has low reactivity with the constituent material of the three-dimensionally shaped article which is fused (or which may be sintered), and thus, the deterioration of the three-dimensionally shaped article 500 can be prevented. Incidentally, in FIGS. 1A and 2A, for the sake of convenience of explanation, the following three layers: layers 501, 502, and 503 are illustrated, however, layers are stacked until the desired shape of the three-dimensionally shaped article 500 is obtained (up to layers 50n in FIGS. 1A and 2A).

Here, each of the layers 501, 502, 503, ..., and 50n is constituted by a support layer 300 formed from the support section forming material ejected from the support section forming material ejection section 1230' and a constituent layer 310 (a layer corresponding to a constituent region of the three-dimensionally shaped article 500) formed from the constituent material ejected from the constituent material ejection section 1230. Further, after forming one layer from the constituent material ejected from the constituent material ejection section 1230 and the support section forming material ejected from the support section forming material ejection section 1230', the entire layer is irradiated with thermal energy from the heating section 1700, and thereby fused or sintered for each layer. In addition, it is also possible that the shape of a three-dimensionally shaped article is completed by forming a plurality of constituent layers 310 and a plurality of support layers 300, and the completed article is fused or sintered in a thermostat bath (heating section) provided separately from the formation device 2000.

FIG. 1B is an enlarged schematic view of a portion C showing the head base 1100 shown in FIG. 1A. As shown in FIG. 1B, the head base 1100 holds a plurality of head units 1400. As will be described in detail later, one head unit 1400 is configured such that the constituent material ejection section 1230 included in a constituent material supply device 1200 is held by a holding jig 1400a. The constituent material ejection section 1230 includes an ejection nozzle 1230a and an ejection drive section 1230b which causes the constituent material to be ejected from the ejection nozzle 1230a by a material supply controller 1500.

Further, FIG. 2B is an enlarged schematic view of a portion C' showing the head base 1100' shown in FIG. 2A. As shown in FIG. 2B, the head base 1100' holds a plurality of head units 1400'. The head unit 1400' is configured such that the support section forming material ejection section 1230' included in a support section forming material supply device 1200' is held by a holding jig 1400a'. The support section forming material ejection section 1230' includes an ejection nozzle 1230a' and an ejection drive section 1230b' which causes the support section forming material to be ejected from the ejection nozzle 1230a' by a material supply controller 1500.

The heating section 1700 will be described by showing an energy irradiation section which irradiates an electromagnetic wave as the thermal energy in this embodiment. By using an electromagnetic wave as the thermal energy to be irradiated, energy can be efficiently irradiated to a supply material as a target, and a three-dimensionally shaped article having high quality can be formed. In addition, it is possible to easily control the irradiation energy amount (power and scanning speed) in accordance with, for example, the type of material to be ejected, and thus, a three-dimensionally shaped article having desired quality can be obtained. However, the invention is not limited to such a configuration, and a configuration in which heating is performed by another method may be adopted. It goes without saying that the invention is not limited to fusing or sintering by an electromagnetic wave. That is, a material to be ejected may be a sintering material, or a fusing material, or a solidifying material to be solidified by another method depending on the situation.

As shown in FIGS. 1A and 1B, the constituent material ejection section 1230 is connected to a constituent material supply unit 1210 which stores a constituent material corresponding to each head unit 1400 held by the head base 1100 through a supply tube 1220. Then, a predetermined constituent material is supplied to the constituent material ejection section 1230 from the constituent material supply unit 1210. In the constituent material supply unit 1210, a material (a constituent material in the form of a paste containing metal particles (constituent material particles)) containing a raw material of the three-dimensionally shaped article 500 to be shaped by the formation device 2000 according to this embodiment is stored in a constituent material storage section 1210a as a supply material, and each constituent material storage section 1210a is connected to one or more constituent material ejection sections 1230 through a supply tube 1220. In this manner, by including individual constituent material storage sections 1210a, a plurality of different types of materials can be supplied from the head base 1100.

As shown in FIGS. 2A and 2B, the support section forming material ejection section 1230' is connected to a support section forming material supply unit 1210' which stores a support section forming material corresponding to each head unit 1400' held by the head base 1100' through a supply tube 1220'. Then, a predetermined support section forming material is supplied to the support section forming material ejection section 1230' from the support section forming material supply unit 1210'. In the support section forming material supply unit 1210', a support section forming material (a support section forming material in the form of a paste containing ceramic particles (support section forming particles)) constituting a support section when shaping the three-dimensionally shaped article 500 is stored in a support section forming material storage section 1210a' as a supply material, and each support section forming material storage section 1210a' is connected to one or more support section forming material ejection sections 1230' through a supply tube 1220'. In this manner, by including individual support section forming material storage sections 1210a', a plurality of different types of support section forming materials can be supplied from the head base 1100'.

As the constituent material, for example, a simple substance powder of magnesium (Mg), iron (Fe), cobalt (Co), chromium (Cr), aluminum (Al), titanium (Ti), copper (Cu), or nickel (Ni), or a mixed powder of an alloy containing at least one metal among these (a maraging steel, stainless steel, a cobalt-chrome-molybdenum alloy, a titanium alloy, a nickel alloy, an aluminum alloy, a cobalt alloy, or a cobalt-chrome alloy), or the like, is formed into a mixed material or the like in the form of a slurry (or a paste) containing a solvent and a binder and can be used.

It is possible to use a widely used engineering plastic such as polyamide, polyacetal, polycarbonate, modified polyphenylene ether, polybutylene terephthalate, or polyethylene terephthalate. Other than these, it is also possible to use an engineering plastic such as polysulfone, polyethersulfone, polyphenylene sulfide, polyarylate, polyimide, polyamideimide, polyetherimide, or polyether ether ketone.

In this manner, the constituent material is not particularly limited, and it is possible to also use a metal other than the above-mentioned metals, a ceramic, a resin, or the like.

Examples of the solvent include water; (poly)alkylene glycol monoalkyl ethers such as ethylene glycol monomethyl ether, ethylene glycol monoethyl ether, propylene glycol monomethyl ether, and propylene glycol monoethyl ether; acetate esters such as ethyl acetate, n-propyl acetate, iso-propyl acetate, n-butyl acetate, and iso-butyl acetate; aromatic hydrocarbons such as benzene, toluene, and xylene; ketones such as methyl ethyl ketone, acetone, methyl isobutyl ketone, ethyl n-butyl ketone, diisopropyl ketone, and acetyl acetone; alcohols such as ethanol, propanol, and butanol; tetra-alkyl ammonium acetates; sulfoxide-based solvents such as dimethyl sulfoxide and diethyl sulfoxide; pyridine-based solvents such as pyridine, γ-picoline, and 2,6-lutidine; and ionic liquids such as tetra-alkyl ammonium acetate (for example, tetra-butyl ammonium acetate, etc.), and one type or two or more types in combination selected from these can be used.

As the binder, for example, an acrylic resin, an epoxy resin, a silicone resin, a cellulosic resin, or another synthetic resin, or polylactic acid (PLA), polyamide (PA), polyphenylene sulfide (PPS), or another thermoplastic resin can be used.

In this embodiment, the support section forming material contains a ceramic. As the support section forming material, for example, a mixed powder of a metal oxide, a metal alkoxide, a metal, or the like is formed into a mixed material or the like in the form of a slurry (or a paste) containing a solvent and a binder and can be used.

However, the support section forming material is not particularly limited, and it is also possible to use a metal, a resin, or the like other than a ceramic as shown in the examples of the constituent material described above.

The formation device 2000 includes the control unit 400 as a control section which controls the stage 120, the constituent material ejection section 1230 included in the constituent material supply device 1200, the heating section 1700, and the support section forming material ejection section 1230' included in the support section forming material supply device 1200' based on the shaping data of the three-dimensionally shaped article output from, for example, a data output device such as a personal computer (not shown). Then, the control unit 400 includes a control section (not shown) which controls the stage 120 and the constituent material ejection section 1230, and the stage 120 and the support section forming material supply device 1200' so that these members are driven to operate in cooperation with each other.

The stage 120 is movably provided on the base 110, and a signal for controlling the start and stop of the movement, the moving direction, the moving amount, the moving speed, or the like of the stage 120 is generated in a stage controller 410 based on a control signal from the control unit 400 and sent to the drive device 111 included in the base 110, and the stage 120 moves in the X, Y, or Z direction shown in the drawing. In the constituent material ejection section 1230 included in the head unit 1400, based on a control signal from the control unit 400, a signal for controlling a material ejection amount from the ejection nozzle 1230a or the like for the ejection drive section 1230b included in the constituent material ejection section 1230 is generated in the material supply controller 1500, and a predetermined amount of the constituent material is ejected from the ejection nozzle 1230a based on the generated signal.

Similarly, in the support section forming material ejection section 1230' included in the head unit 1400', based on a control signal from the control unit 400, a signal for controlling a material ejection amount from the ejection nozzle 1230a' or the like for the ejection drive section 1230b' included in the support section forming material ejection section 1230' is generated in the material supply controller 1500, and a predetermined amount of the support section forming material is ejected from the ejection nozzle 1230a' based on the generated signal.

Further, in the heating section 1700, a control signal is sent from the control unit 400 to the heating section controller 1710, and an output signal for irradiating an electromagnetic wave is sent from the heating section controller 1710 to the heating section 1700.

Next, the head unit 1400 will be described in further detail. Incidentally, the head unit 1400' is configured to include, in place of the constituent material ejection section 1230, the support section forming material ejection section 1230' in the same arrangement, and has the same configuration as that of the head unit 1400. Therefore, a detailed description of the configuration of the head unit 1400' will be omitted.

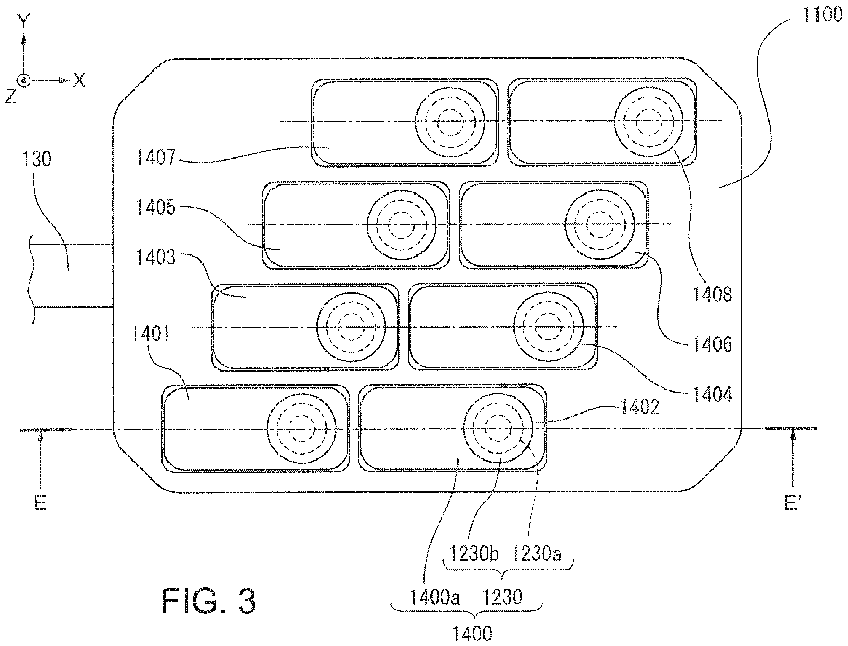

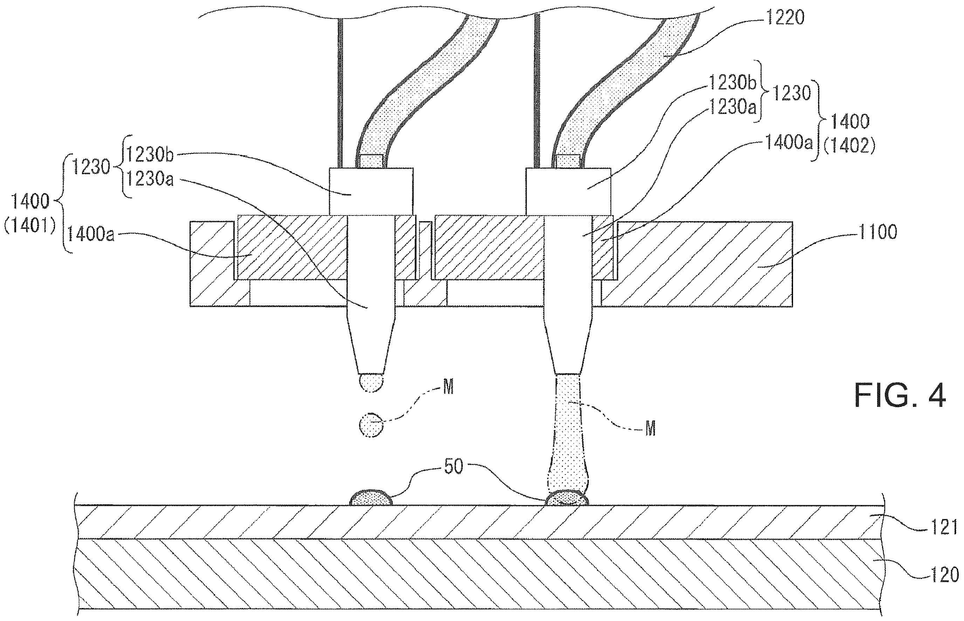

FIGS. 3 and 4 show one example of the holding form of a plurality of head units 1400 held by the head base 1100 and the constituent material ejection section 1230 held by the head unit 1400, and FIG. 3 is an external view of the head base 1100 seen from the direction of the arrow D shown in FIG. 1B, and FIG. 4 is a schematic cross-sectional view taken along the line E-E' shown in FIG. 3.

As shown in FIG. 3, a plurality of head units 1400 are held by the head base 1100 through a fixing member (not shown). In the head base 1100 of the formation device 2000 according to this embodiment, from the lower part of FIG. 3, head units 1401 and 1402 in the first row, head units 1403 and 1404 in the second row, head units 1405 and 1406 in the third row, and head units 1407 and 1408 in the fourth row, that is, eight head units 1400 are included. Then, although not shown in the drawing, the constituent material ejection section 1230 included in each of the head units 1401 to 1408 is configured to be connected to the constituent material supply unit 1210 through the supply tube 1220 via the ejection drive section 1230b and held by the holding jig 1400a.

As shown in FIG. 4, the constituent material ejection section 1230 ejects a material M which is the constituent material of a three-dimensionally shaped article from the ejection nozzle 1230a onto the sample plate 121 placed on the stage 120. In the head unit 1401, an ejection form in which the material M is ejected in the form of a droplet is illustrated, and in the head unit 1402, an ejection form in which the material M is supplied in the form of a continuous body is illustrated. The ejection form of the material M in the formation device 2000 of this embodiment is a droplet. However, it is also possible to use the ejection nozzle 1230a which can supply the constituent material in the form of a continuous body.

The material M ejected in the form of a droplet from the ejection nozzle 1230a flies in a substantially gravity direction and lands on the sample plate 121. Then, the material M after landing forms a landing portion 50. An assembly of the landing portion 50 is formed as the constituent layer 310 (see FIG. 1A) of the three-dimensionally shaped article 500 formed on the sample plate 121.

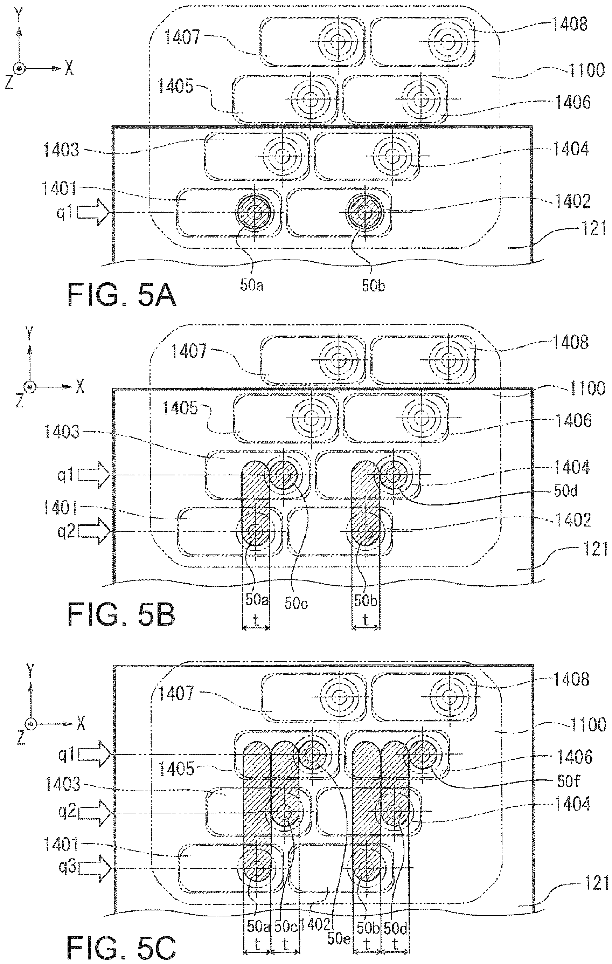

FIGS. 5A to 5C, FIGS. 6D and 6E, and FIG. 7 are plan views (seen from the direction of the arrow D shown in FIG. 1B) conceptually illustrating a relationship between the arrangement of the head units 1400 and the formation form of the landing portion 50. First, as shown in FIG. 5A, onto a shaping starting point q1 on the sample plate 121, the material M is ejected from the ejection nozzle 1230a of each of the head units 1401 and 1402, and by the material M landing on the sample plate 121, the landing portions 50a and 50b are formed. Incidentally, for the sake of convenience of explanation, although the drawings are plan views, the landing portion 50 is hatched, and the constituent layer 310 of the layer 501 as the first layer formed on the upper surface of the sample plate 121 is illustrated and described.

First, as shown in FIG. 5A, onto the shaping starting point q1 of the constituent layer 310 of the layer 501 on the sample plate 121, the material M is ejected from the constituent material ejection section 1230 included in each of the head units 1401 and 1402 in the first row in the lower part of the drawing. By the ejected material M, the landing portions 50a and 50b are formed.

While continuously ejecting the material M from the constituent material ejection section 1230 of each of the head units 1401 and 1402, the sample plate 121 is moved in the Y(+) direction relatively with respect to the head base 1100 until the shaping starting point q1 shown in FIG. 5B reaches a position corresponding to the head units 1403 and 1404 in the second row. By doing this, the landing portions 50a and 50b are extended from the shaping starting point q1 to the position q2 after the relative movement of the sample plate 121 while keeping the width t. Further, the material M is ejected from each of the head units 1403 and 1404 in the second row corresponding to the shaping starting point q1, and landing portions 50c and 50d start to be formed.

As shown in FIG. 5B, the landing portions 50c and 50d start to be formed, and while continuously ejecting the material M from the constituent material ejection section 1230 of each of the head units 1403 and 1404, the sample plate 121 is moved in the Y(+) direction relatively with respect to the head base 1100 until the shaping starting point q1 shown in FIG. 5C reaches a position corresponding to the head units 1405 and 1406 in the third row. By doing this, the landing portions 50c and 50d are extended from the shaping starting point q1 to the position q2 after the movement of the sample plate 121 while keeping the width t. At the same time, the landing portions 50a and 50b are extended from the shaping starting point q1 to the position q3 after the relative movement of the sample plate 121 while keeping the width t. The material M is ejected from each of the head units 1405 and 1406 in the third row corresponding to the shaping starting point q1, and landing portions 50e and 50f start to be formed.

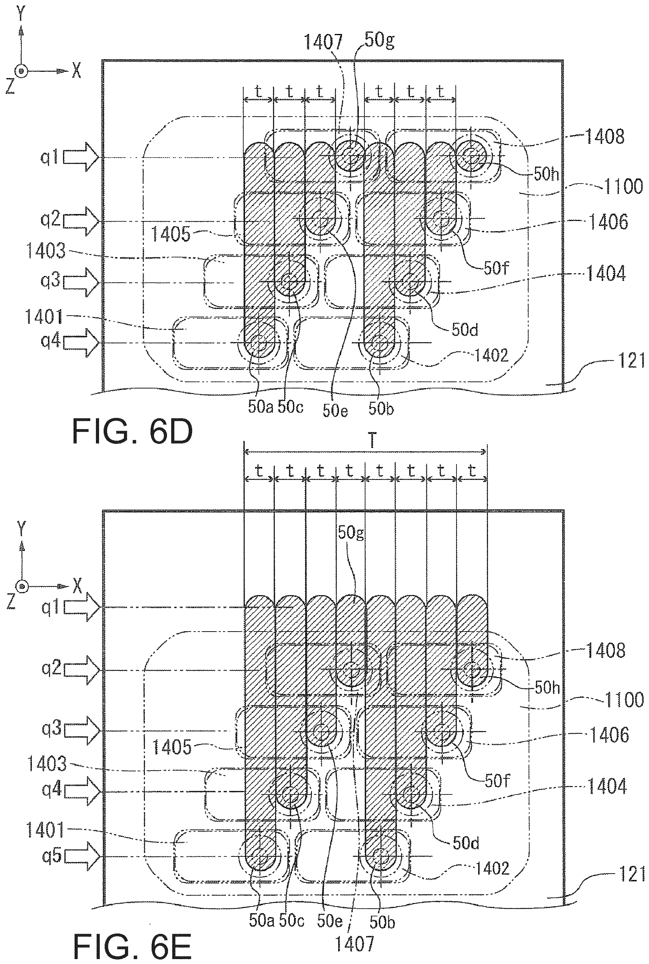

As shown in FIG. 5C, the landing portions 50e and 50f start to be formed, and while continuously ejecting the material M from the constituent material ejection section 1230 of each of the head units 1405 and 1406, the sample plate 121 is moved in the Y(+) direction relatively with respect to the head base 1100 until the shaping starting point q1 shown in FIG. 6D reaches a position corresponding to the head units 1407 and 1408 in the fourth row. By doing this, the landing portions 50e and 50f are extended from the shaping starting point q1 to the position q2 after the movement of the sample plate 121 while keeping the width t. At the same time, the landing portions 50a and 50b are extended from the shaping starting point q1 to the position q4 after the relative movement of the sample plate 121, and the landing portions 50c and 50d are extended from the shaping starting point q1 to the position q3 after the relative movement of the sample plate 121 while keeping the width t. The material M is ejected from each of the head units 1407 and 1408 in the fourth row corresponding to the shaping starting point q1, and landing portions 50g and 50h start to be formed.

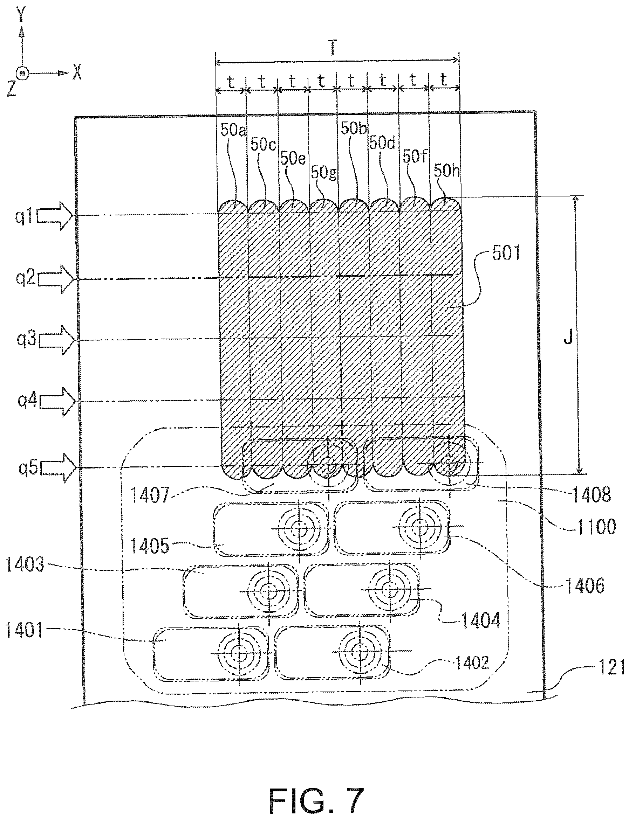

In the case where the position q5 is determined as a shaping finishing position (hereinafter, the position q5 is referred to as "shaping finishing point q5"), as shown in FIG. 6E, the sample plate 121 is relatively moved until the head units 1401 and 1402 reach the shaping finishing point q5, whereby the landing portions 50g and 50h are extended. Then, in the head units 1401 and 1402 after reaching the shaping finishing point q5, the ejection of the material M from the constituent material ejection section 1230 of each of the head units 1401 and 1402 is stopped. Further, while relatively moving the sample plate 121 in the Y(+) direction, the material M is ejected from the constituent material ejection section 1230 until the head units 1403, 1404, 1405, 1406, 1407, and 1408 reach the shaping finishing point q5. By doing this, as shown in FIG. 7, the landing portions 50a, 50b, 50c, 50d, 50e, 50f, 50g, and 50h are formed from the shaping starting point q1 to the shaping finishing point q5 while keeping the width t. In this manner, by ejecting and supplying the material M sequentially from the head units 1401, 1402, 1403, 1404, 1405, 1406, 1407, and 1408 while moving the sample plate 121 from the shaping starting point q1 to the shaping finishing point q5, the landing portion 50 in a substantially rectangular shape with a width of T and a length of J can be formed in the illustration of this embodiment. Then, the constituent layer 310 of the layer 501 as the first layer as an assembly of the landing portion 50 can be shaped and formed.

As described above, in the formation device 2000 according to this embodiment, by selectively ejecting and supplying the material M from the constituent material ejection section 1230 included in each of the head units 1401, 1402, 1403, 1404, 1405, 1406, 1407, and 1408 in synchronization with the movement of the stage 120 provided with the sample plate 121, the constituent layer 310 in a desired shape can be formed on the sample plate 121. Further, as described above, merely by moving the stage 120 in one direction along the Y-axis direction in this example, the landing portion 50 in a desired shape, and the constituent layer 310 as an assembly of the landing portion 50 can be obtained in a region with a width of T and a length of J shown in FIG. 7.

Further, as for the material M to be ejected from the constituent material ejection section 1230, a constituent material different from the constituent material to be ejected from the other head units can also be ejected and supplied from any one unit or two or more units of the head units 1401, 1402, 1403, 1404, 1405, 1406, 1407, and 1408. Therefore, by using the formation device 2000 according to this embodiment, a three-dimensionally shaped article formed from different types of materials can be obtained.

Incidentally, in the layer 501 as the first layer, as described above, before, during or after forming the constituent layer 310, by ejecting the support section forming material from the support section forming material ejection section 1230', the support layer 300 can be formed in the same manner as described above. Then, also when forming the layers 502, 503, ..., and 50n by stacking on the layer 501, the constituent layer 310 and the support layer 300 can be formed in the same manner.

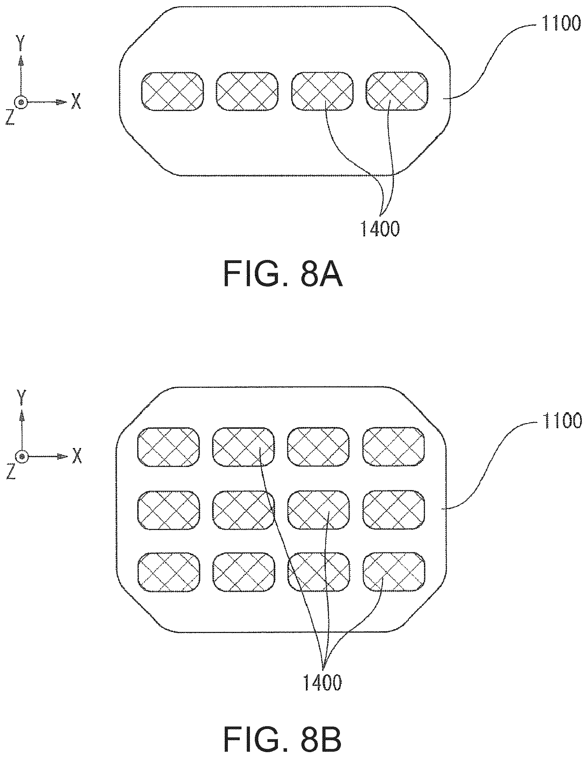

The number and arrangement of the head units 1400 and 1400' included in the formation device 2000 according to the above-mentioned embodiment are not limited to those described above. In FIGS. 8A and 8B, examples of other arrangement of the head units 1400 placed in the head base 1100 are schematically shown.

FIG. 8A shows a form in which a plurality of head units 1400 are arranged in parallel in the X-axis direction in the head base 1100. FIG. 8B shows a form in which the head units 1400 are arranged in a grid pattern in the head base 1100. In either case, the number of the head units to be arranged is not limited to the examples shown in the drawings.

Next, one embodiment of the three-dimensionally shaped article production method which is performed using the formation device 2000 according to the above-mentioned embodiment will be described.

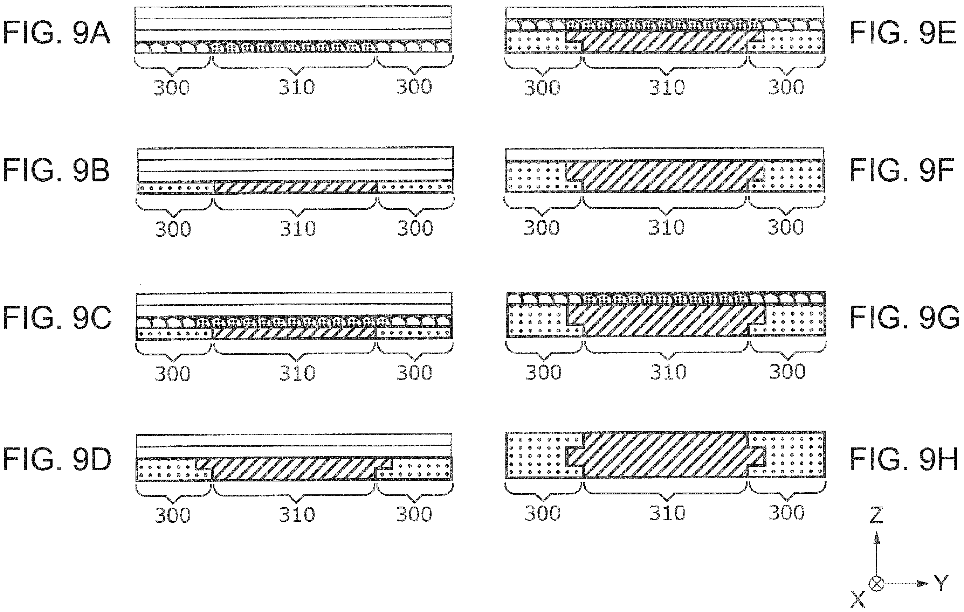

FIGS. 9A to 9H are schematic views showing one example of a process for producing a three-dimensionally shaped article using the formation device 2000. This embodiment is an embodiment of the three-dimensionally shaped article production method in which a three-dimensionally shaped article is produced by heating layers formed by ejecting the constituent material and the support section forming material from the constituent material ejection section 1230 and the support section forming material ejection section 1230' every time when one layer is formed using the heating section 1700 included in the formation device 2000. Further, in the three-dimensionally shaped article production method of this embodiment, a three-dimensionally shaped article in a fused state is produced, however, it goes without saying that the heating temperature may be decreased, and a three-dimensionally shaped article in a sintered state may be produced. In Figs. 9A to 9H, plural auxiliary lines are drawn such that the thicknesses of the support layer 300 and the constituent layer 310 can be easily recognized in the Z direction.

First, as shown in FIG. 9A, the constituent material is ejected from the constituent material ejection section 1230, and the support section forming material is ejected from the support section forming material ejection section 1230', whereby a constituent layer 310 and a support layer 300 are formed in a layer 501 as a first layer. Here, the support layer 300 is formed in a region other than a forming region of a three-dimensionally shaped article in the layer (a region corresponding to the constituent layer 310).

Subsequently, as shown in FIG. 9B, the layer 501 as the first layer is heated by the heating section 1700, whereby the constituent layer 310 of the layer is fused, and also the support layer 300 is sintered. Incidentally, the heating temperature of the heating section 1700 in this embodiment is set to a temperature at which the metal particles (constituent material particles) contained in the constituent material are fused, and the ceramic particles (support section forming particles) contained in the support section forming material are sintered.

Thereafter, the operation shown in FIG. 9A and the operation shown in FIG. 9B are repeated, whereby a three-dimensionally shaped article is completed.

Specifically, as shown in FIG. 9C, the constituent material is ejected from the constituent material ejection section 1230, and the support section forming material is ejected from the support section forming material ejection section 1230', whereby a constituent layer 310 and a support layer 300 are formed in a layer 502 as a second layer. Then, as shown in FIG. 9D, the layer 502 as the second layer is heated by the heating section 1700.

Further, as shown in FIG. 9E, a constituent layer 310 and a support layer 300 are formed in a layer 502 as a third layer, and as shown in FIG. 9F, the layer 502 as the third layer is heated by the heating section 1700. Then, as shown in FIG. 9G, a constituent layer 310 and a support layer 300 are formed in a layer 502 as a fourth layer, and as shown in FIG. 9H, the layer 502 as the fourth layer is heated by the heating section 1700, whereby a three-dimensionally shaped article (the constituent layer 310 in a fused state) is completed.

Next, one embodiment of the three-dimensionally shaped article production method shown in FIGS. 9A to 9H will be described using a flowchart.

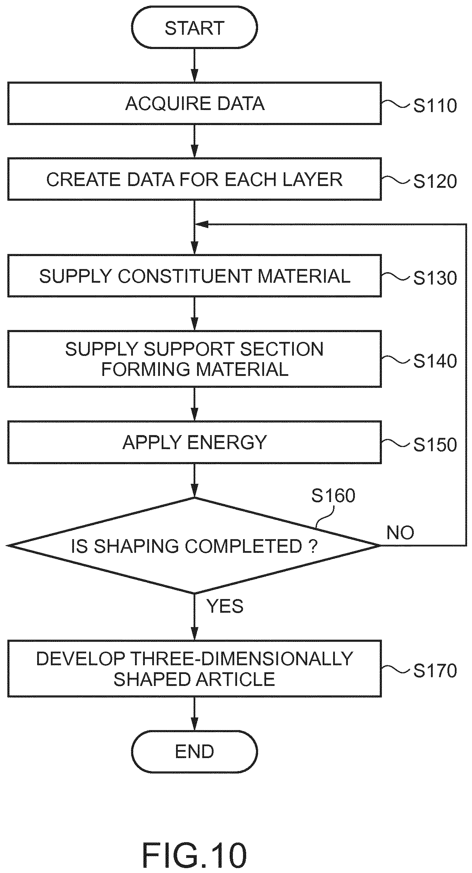

Here, FIG. 10 is a flowchart of the three-dimensionally shaped article production method according to this embodiment.

As shown in FIG.10, in the three-dimensionally shaped article production method of this embodiment, first, in Step S110, data of the three-dimensionally shaped article is acquired. More specifically, for example, data representing the shape of the three-dimensionally shaped article is acquired from an application program or the like executed by a personal computer.

Subsequently, in Step S120, data for each layer is created. More specifically, the data representing the shape of the three-dimensionally shaped article is sliced according to the shaping resolution in the Z direction, and bit map data (cross-sectional data) is created for each cross section.

At this time, the bit map data to be created is data in which the forming region of the three-dimensionally shaped article and the non-forming region of the three-dimensionally shaped article are distinguished.

Subsequently, in Step S130, based on the data for forming the forming region of the three-dimensionally shaped article, the constituent material is ejected (supplied) from the constituent material ejection section 1230, whereby the constituent layer 310 is formed.

Subsequently, in Step S140, based on the data for forming the non-forming region of the three-dimensionally shaped article, the support section forming material is ejected (supplied) from the support section forming material ejection section 1230', whereby the support layer 300 corresponding to the same layer as that of the constituent layer 310 formed in Step S130 is formed.

The order of Step S130 and Step S140 may be reversed, or these steps may be performed simultaneously.

Subsequently, in Step S150, an electromagnetic wave is irradiated (thermal energy is applied) from the heating section 1700 to the layer corresponding to the constituent layer 310 formed in Step S130 and the support layer 300 formed in Step S140, whereby the constituent layer 310 in the layer is fused and the support layer 300 is sintered.

In this step, the constituent layer 310 is fused and the support layer 300 is sintered, however, the constituent layer 310 may be fused and the support layer 300 may not be fused or sintered, or the constituent layer 310 may be sintered and the support layer 300 may not be fused or sintered.

Then, in Step S160, the steps from Step S130 to Step S160 are repeated until the shaping of the three-dimensionally shaped article based on the bit map data corresponding to the respective layers formed in Step S120 is completed.

When the shaping of the three-dimensionally shaped article is completed, in Step S170, the three-dimensionally shaped article is developed (a portion corresponding to the support layer 300 which is the non-forming region of the three-dimensionally shaped article is removed from a portion corresponding to the constituent layer 310 which is the forming region of the three-dimensionally shaped article), and the three-dimensionally shaped article production method of this embodiment is completed.

Next, another embodiment of the three-dimensionally shaped article production method which is performed using the formation device 2000 according to the above-mentioned embodiment will be described.

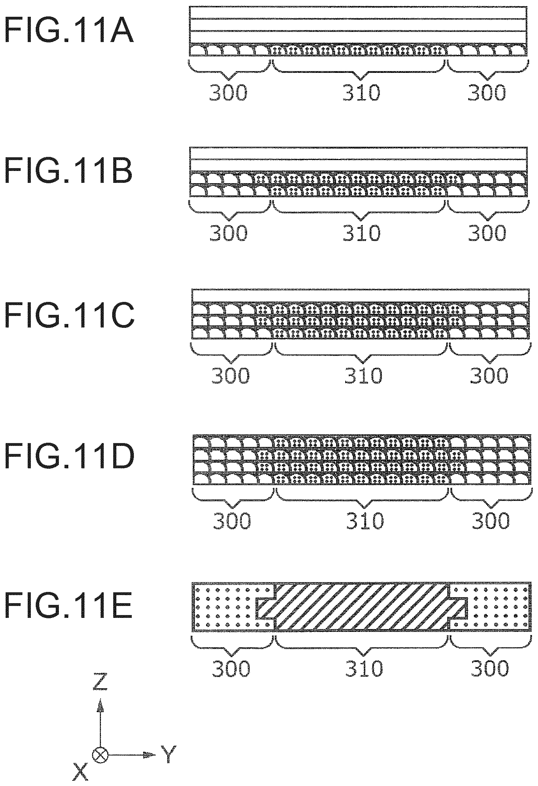

FIGS. 11A to 11E are schematic views showing one example of a process for producing a three-dimensionally shaped article using the formation device 2000. This embodiment is an embodiment of the three-dimensionally shaped article production method in which after completion of the formation of the shape of a three-dimensionally shaped article by ejecting the constituent material and the support section forming material from the constituent material ejection section 1230 and the support section forming material ejection section 1230', the formed article of the three-dimensionally shaped article is heated in a thermostat bath (heating section, not shown in the drawing) provided separately from the formation device 2000 without using the heating section 1700 included in the formation device 2000, whereby the three-dimensionally shaped article is produced (fused). Further, in the three-dimensionally shaped article production method of this embodiment, a three-dimensionally shaped article in a fused state is produced, however, it goes without saying that the heating temperature may be decreased, and a three-dimensionally shaped article in a sintered state may be produced.

First, as shown in FIG. 11A, the constituent material is ejected from the constituent material ejection section 1230, and the support section forming material is ejected from the support section forming material ejection section 1230', whereby a constituent layer 310 and a support layer 300 are formed in a layer 501 as a first layer. Here, the support layer 300 is formed in a region other than a forming region of a three-dimensionally shaped article in the layer (a region corresponding to the constituent layer 310).

Subsequently, as shown in FIG. 11B, the constituent material is ejected from the constituent material ejection section 1230, and the support section forming material is ejected from the support section forming material ejection section 1230', whereby a constituent layer 310 and a support layer 300 are formed in a layer 502 as a second layer.

Then, as shown in FIGS. 11C and 11D, the operations shown in FIGS. 11A and 11B are repeated, whereby the shape of a three-dimensionally shaped article is completed.

Then, as shown in FIG. 11E, the formed article of the three-dimensionally shaped article is heated in a thermostat bath (not shown), whereby the constituent layer 310 of the formed article of the three-dimensionally shaped article is fused, and also the support layer 300 is sintered, and thus, the three-dimensionally shaped article (the constituent layer 310 in a fused state) is completed. Incidentally, the heating temperature in the thermostat bath in this embodiment is set to a temperature at which the metal particles (constituent material particles) contained in the constituent material are fused, and the ceramic particles (support section forming particles) contained in the support section forming material are sintered.

Next, one embodiment of the three-dimensionally shaped article production method shown in FIGS. 11A to 11E will be described using a flowchart.

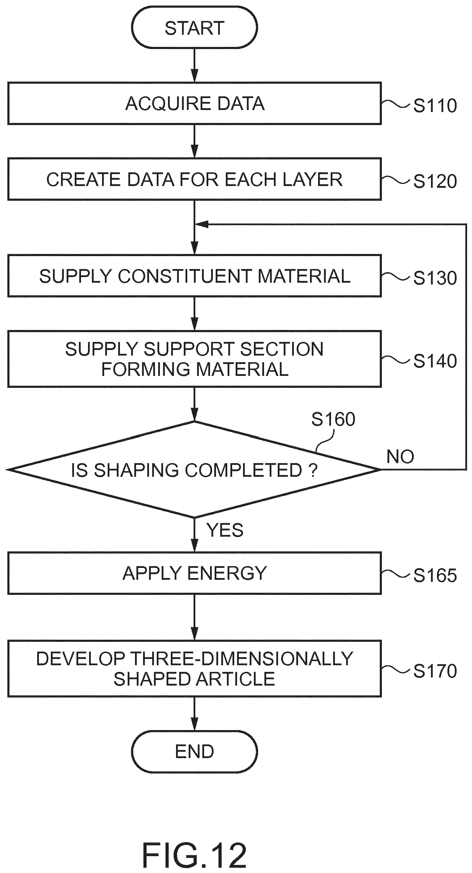

Here, FIG. 12 is a flowchart of the three-dimensionally shaped article production method according to this embodiment.

Incidentally, Step S110 to Step S140 and Step S170 in FIG. 12 are the same as Step S110 to Step S140 and Step S170 in FIG. 10, and therefore, the description thereof will be omitted.

As shown in FIG.12, in the three-dimensionally shaped article production method of this embodiment, after completion of Step S140, the process proceeds to Step S160.

Then, in Step S160, the steps from Step S130 to Step S160 are repeated until the shaping of the formed article of the three-dimensionally shaped article based on the bit map data corresponding to the respective layers formed in Step S120 is completed, whereby the shaping of the formed article of the three-dimensionally shaped article is completed. Then, the process proceeds to Step S165.

In Step S165, the formed article of the three-dimensionally shaped article formed by repeating the steps from Step S130 to Step S160 is placed in a thermostat bath (not shown), whereby the constituent layer 310 is fused and also the support layer 300 is sintered therein. Incidentally, in this step, the constituent layer 310 is fused and the support layer 300 is sintered, however, the constituent layer 310 may be fused and the support layer 300 may not be fused or sintered, or the constituent layer 310 may be sintered and the support layer 300 may not be fused or sintered. Then, after completion of this step, the process proceeds to Step S170.

Here, in the flowable composition set which is used in the formation device 2000 and includes the flowable composition containing the constituent material particles of the three-dimensionally shaped article and the flowable composition containing the support section forming particles for forming the support section (support layer 300) which supports the three-dimensionally shaped article when forming the three-dimensionally shaped article, the sintering temperature of the support section forming particles is higher than the sintering temperature of the constituent material particles. Therefore, the sintering of the support section can be suppressed while sintering the constituent material of the three-dimensionally shaped article. Due to this, the increase in the load of a separation work when the three-dimensionally shaped article is taken out, a shaping work after the three-dimensionally shaped article is taken out, and the like resulted from the sintering of also a portion other than the region corresponding to the three-dimensionally shaped article can be suppressed. As a result, the post-treatment step after forming the three-dimensionally shaped article can be reduced.

Further or alternatively, in the flowable composition set of this embodiment, the melting point of the support section forming particles is higher than the melting point of the constituent material particles. Therefore, the fusion of the support section can be suppressed while fusing the constituent material of the three-dimensionally shaped article. Due to this, the increase in the load of a separation work when the three-dimensionally shaped article is taken out, a shaping work after the three-dimensionally shaped article is taken out, and the like resulted from the fusion of also a portion other than the region corresponding to the three-dimensionally shaped article can be suppressed. As a result, the post-treatment step after forming the three-dimensionally shaped article can be reduced.

Here, it is preferred that at least one of the flowable composition containing the constituent material particles and the flowable composition containing the support section forming particles contains at least one of a solvent and a binder. This is because when the flowable composition contains a solvent, the scattering or the like of solid particles can be suppressed, and when the flowable composition contains a binder, the collapse of the shape before sintering or fusing the constituent material of the three-dimensionally shaped article can be suppressed. Due to this, according to such a flowable composition set, the workability when producing the three-dimensionally shaped article can be improved.

Further, the support section forming particles of this embodiment contain ceramic particles. A ceramic has a high sintering temperature and a high melting point, and therefore, the sintering or fusion of a portion other than the region corresponding to the three-dimensionally shaped article can be easily suppressed.

Further, the constituent material particles of this embodiment contain metal particles. According to this, a robust three-dimensionally shaped article can be produced.

Incidentally, the term "metal particles" includes an alloy and a metal compound in addition to a pure metal, and also includes a metalloid and a metalloid compound.

That is, the support section forming particles of this embodiment contain ceramic particles and the constituent material particles of this embodiment contain metal particles. According to this, the sintering or fusion of a portion other than the region corresponding to the three-dimensionally shaped article can be easily suppressed, and also a robust three-dimensionally shaped article can be produced.

On the other hand, a configuration in which the support section forming particles contain at least one of metal particles and ceramic particles, and the constituent material particles contain resin particles may be adopted. According to this configuration, a three-dimensionally shaped article made of a resin can be produced while suppressing the sintering or fusion of a portion other than the region corresponding to the three-dimensionally shaped article.

Further, it is preferred that the ceramic particles as the support section forming particles are particles containing at least one component selected from silica, alumina, titanium oxide, zinc oxide, zircon oxide, tin oxide, barium titanate, potassium titanate, magnesium oxide, and sodium oxide. This is because the sintering or fusion of a portion other than the region corresponding to the three-dimensionally shaped article can be effectively suppressed.

Further, it is preferred that the metal particles as the constituent material particles are particles containing at least one component selected from aluminum, titanium, iron, copper, magnesium, stainless steel, maraging steel, silica, alumina, titanium oxide, zinc oxide, zircon oxide, tin oxide, barium titanate, potassium titanate, magnesium oxide, sodium oxide, magnesium hydroxide, aluminum hydroxide, potassium hydroxide, silicon nitride, titanium nitride, zinc sulfide, calcium carbonate, magnesium carbonate, calcium silicate, magnesium silicate, calcium phosphate, aluminum borate, and magnesium borate. This is because a particularly robust three-dimensionally shaped article can be produced.

Further, the flowable composition containing the constituent material particles of the three-dimensionally shaped article of this embodiment is used along with the flowable composition containing the support section forming particles for forming the support section which supports the three-dimensionally shaped article when forming the three-dimensionally shaped article, and it can be expressed that the sintering temperature of the support section forming particles is higher than the sintering temperature of the constituent material particles. By configuring the flowable composition containing the constituent material particles as described above, the sintering of the support section can be suppressed while sintering the constituent material of the three-dimensionally shaped article. Due to this, the increase in the load of a separation work when the three-dimensionally shaped article is taken out, a shaping work after the three-dimensionally shaped article is taken out, and the like resulted from the sintering of also a portion other than the region corresponding to the three-dimensionally shaped article can be suppressed. As a result, the post-treatment step after forming the three-dimensionally shaped article can be reduced.

Further, the flowable composition containing the support section forming particles for forming the support section which supports the three-dimensionally shaped article when forming the three-dimensionally shaped article of this embodiment is used along with the flowable composition containing the constituent material particles of the three-dimensionally shaped article, and it can be expressed that the sintering temperature of the support section forming particles is higher than the sintering temperature of the constituent material particles. By configuring the flowable composition containing the support section forming particles as described above, the sintering of the support section can be suppressed while sintering the constituent material of the three-dimensionally shaped article. Due to this, the increase in the load of a separation work when the three-dimensionally shaped article is taken out, a shaping work after the three-dimensionally shaped article is taken out, and the like resulted from the sintering of also a portion other than the region corresponding to the three-dimensionally shaped article can be suppressed. As a result, the post-treatment step after forming the three-dimensionally shaped article can be reduced.

Here, when the sintering temperature of the support section forming particles is 1350°C or higher and 1600°C or lower, and the sintering temperature of the constituent material particles is 1100°C or higher and 1400°C or lower, the increase in the load of a separation work when the three-dimensionally shaped article is taken out, a shaping work after the three-dimensionally shaped article is taken out, and the like resulted from the sintering of also a portion other than the region corresponding to the three-dimensionally shaped article can be effectively suppressed.

Further, the flowable composition containing the constituent material particles of the three-dimensionally shaped article of this embodiment is used along with the flowable composition containing the support section forming particles for forming the support section which supports the three-dimensionally shaped article when forming the three-dimensionally shaped article, and it can be expressed that the melting point of the support section forming particles is higher than the melting point of the constituent material particles. By configuring the flowable composition containing the constituent material particles as described above, the fusion of the support section can be suppressed while fusing the constituent material of the three-dimensionally shaped article. Due to this, the increase in the load of a separation work when the three-dimensionally shaped article is taken out, a shaping work after the three-dimensionally shaped article is taken out, and the like resulted from the fusion of also a portion other than the region corresponding to the three-dimensionally shaped article can be suppressed. As a result, the post-treatment step after forming the three-dimensionally shaped article can be reduced.

The flowable composition containing the support section forming particles for forming the support section which supports the three-dimensionally shaped article when forming the three-dimensionally shaped article of this embodiment is used along with the flowable composition containing the constituent material particles of the three-dimensionally shaped article, and it can be expressed that the melting point of the support section forming particles is higher than the melting point of the constituent material particles. By configuring the flowable composition containing the support section forming particles as described above, the fusion of the support section can be suppressed while fusing the constituent material of the three-dimensionally shaped article. Due to this, the increase in the load of a separation work when the three-dimensionally shaped article is taken out, a shaping work after the three-dimensionally shaped article is taken out, and the like resulted from the fusion of also a portion other than the region corresponding to the three-dimensionally shaped article can be suppressed. As a result, the post-treatment step after forming the three-dimensionally shaped article can be reduced.

Here, when the melting point of the support section forming particles is 1700°C or higher and 2730°C or lower, the sintering temperature of the support section forming particles is 1300°C or higher and 1600°C or lower, and the melting point of the constituent material particles is 1500°C or higher and 1600°C or lower, the increase in the load of a separation work when the three-dimensionally shaped article is taken out, a shaping work after the three-dimensionally shaped article is taken out, and the like resulted from the fusion or excessive sintering of a portion other than the region corresponding to the three-dimensionally shaped article can be effectively suppressed.

Such being the case, it is preferred that in the flowable composition which is used in the three-dimensionally shaped article production device in which the three-dimensionally shaped article is solidified by heating when forming the three-dimensionally shaped article, at least one of the sintering temperature and the melting point when the three-dimensionally shaped article is solidified with the formation of the three-dimensionally shaped article is indicated.

This is because if at least one of the sintering temperature and the melting point for determining the heating temperature when the three-dimensionally shaped article is solidified is indicated in the flowable composition, for example, in the case where the flowable composition is used in the three-dimensionally shaped article production device which uses both of the flowable composition containing the constituent material particles and the flowable composition containing the support section forming particles, even when the flowable composition is used as the flowable composition containing the constituent material particles or as the flowable composition containing the support section forming particles, the sintering or fusion of a portion other than the region corresponding to the three-dimensionally shaped article can be effectively suppressed.

Incidentally, the phrase "at least one of the sintering temperature and the melting point when the three-dimensionally shaped article is solidified is indicated" includes a case where the sintering temperature or the melting point is directly indicated on a storage section or the like of the flowable composition, and other than this, also includes a case where the sintering temperature or the melting point is indirectly indicated by indicating the range of the recommended heating temperature. Further, a case where the sintering temperature or the melting point is indirectly indicated by indicating a model name or the like of a three-dimensionally shaped article production device in which the range of the heating temperature is specified as the three-dimensionally shaped article production device which can be used is also included. In addition, a case where the sintering temperature or the melting point is directly indicated on a container or a packaging material of the flowable composition, and also a case where the sintering temperature or the melting point is indicated on another material associated therewith (for example, an instruction, or the like)) are also included.

Further, it is also preferred to indicate the use thereof (it is used as the constituent material of the three-dimensionally shaped article or it is used as the support section forming material, and so on) instead of at least one of the sintering temperature and the melting point or along with at least one of the sintering temperature and the melting point.

The invention is not limited to the above-mentioned embodiments, but can be implemented in various configurations without departing from the scope thereof as defined in the appended claims. For example, the technical features in the embodiments corresponding to the technical features in the respective forms described in "SUMMARY" may be appropriately replaced or combined in order to solve part or all of the problems described above or achieve part or all of the advantageous effects described above. Further, the technical features may be appropriately deleted unless they are described as essential features in the specification. As a further example, whilst constituent-forming and support portion-forming head units 1400, 1400' are shown on different head bases 1100, 1100', they may be provided on the same head base.

## Claims

1. A flowable composition set, comprising a flowable composition containing constituent material particles of a three-dimensionally shaped article and a flowable composition containing support section forming particles for forming a support section which supports the three-dimensionally shaped article when forming the three-dimensionally shaped article, wherein
the sintering temperature of the support section forming particles is higher than the sintering temperature of the constituent material particles.

2. A flowable composition set, comprising a flowable composition containing constituent material particles of a three-dimensionally shaped article and a flowable composition containing support section forming particles for forming a support section which supports the three-dimensionally shaped article when forming the three-dimensionally shaped article, wherein
the melting point of the support section forming particles is higher than the melting point of the constituent material particles.

3. The flowable composition set according to claim 1 or claim 2, wherein at least one of the flowable composition containing the constituent material particles and the flowable composition containing the support section forming particles contains at least one of a solvent and a binder.

4. The flowable composition set according to any one of the preceding claims, wherein the support section forming particles contain ceramic particles.

5. The flowable composition set according to any one of the preceding claims, wherein the constituent material particles contain metal particles.

6. The flowable composition set according to any one of the preceding claims, wherein the support section forming particles contain ceramic particles and the constituent material particles contain metal particles.

7. The flowable composition set according to any one of claims 1 to 3, wherein
the support section forming particles contain at least one of metal particles and ceramic particles, and
the constituent material particles contain resin particles.

8. The flowable composition set according to any one of claims 4, 6 and 7, wherein the ceramic particles are particles containing at least one component selected from silica, alumina, titanium oxide, zinc oxide, zircon oxide, tin oxide, barium titanate, potassium titanate, magnesium oxide, and sodium oxide.

9. The flowable composition set according to any one of claims 5 to 7, wherein the metal particles are particles containing at least one component selected from aluminum, titanium, iron, copper, magnesium, stainless steel, maraging steel, silica, alumina, titanium oxide, zinc oxide, zircon oxide, tin oxide, barium titanate, potassium titanate, magnesium oxide, sodium oxide, magnesium hydroxide, aluminum hydroxide, potassium hydroxide, silicon nitride, titanium nitride, zinc sulfide, calcium carbonate, magnesium carbonate, calcium silicate, magnesium silicate, calcium phosphate, aluminum borate, and magnesium borate.

10. A flowable composition, which is used along with a flowable composition containing support section forming particles for forming a support section which supports a three-dimensionally shaped article when forming the three-dimensionally shaped article, and contains constituent material particles of the three-dimensionally shaped article, wherein
the sintering temperature of the support section forming particles is higher than the sintering temperature of the constituent material particles.

11. A flowable composition, which is used along with a flowable composition containing constituent material particles of a three-dimensionally shaped article, and contains support section forming particles for forming a support section which supports the three-dimensionally shaped article when forming the three-dimensionally shaped article, wherein
the sintering temperature of the support section forming particles is higher than the sintering temperature of the constituent material particles.

12. The flowable composition according to claim 10 or claim 11, wherein the sintering temperature of the support section forming particles is 1350°C or higher and 1600°C or lower, and the sintering temperature of the constituent material particles is 1100°C or higher and 1400°C or lower.

13. A flowable composition, which is used along with a flowable composition containing support section forming particles for forming a support section which supports a three-dimensionally shaped article when forming the three-dimensionally shaped article, and contains constituent material particles of the three-dimensionally shaped article, wherein
the melting point of the support section forming particles is higher than the melting point of the constituent material particles.

14. A flowable composition, which is used along with a flowable composition containing constituent material particles of a three-dimensionally shaped article, and contains support section forming particles for forming a support section which supports the three-dimensionally shaped article when forming the three-dimensionally shaped article, wherein
the melting point of the support section forming particles is higher than the melting point of the constituent material particles.

15. The flowable composition according to claim 13 or claim 14, wherein the melting point of the support section forming particles is 1700°C or higher and 2730°C or lower, the sintering temperature of the support section forming particles is 1300°C or higher and 1600°C or lower, and the melting point of the constituent material particles is 1500°C or higher and 1600°C or lower.

16. A flowable composition, which is used in a three-dimensionally shaped article production device in which a three-dimensionally shaped article is solidified by heating when forming the three-dimensionally shaped article, wherein
at least one of the sintering temperature and the melting point when the three-dimensionally shaped article is solidified with the formation of the three-dimensionally shaped article is indicated.
